Europäisches Patentamt

European Patent Office

Office européen des brevets

(19)

(11) Numéro de publication : **0 680 206 A1**

# (12) DEMANDE DE BREVET EUROPEEN

(21) Numéro de dépôt : **95400880.1**

(22) Date de dépôt : **20.04.95**

(51) Int. Cl.⁶ : **H04N 5/33**

(30) Priorité : **29.04.94 FR 9405239**

(43) Date de publication de la demande :
**02.11.95 Bulletin 95/44**

(84) Etats contractants désignés :
**DE FR GB IT**

(71) Demandeur : **THOMSON-CSF**
**173, Boulevard Haussmann**
**F-75008 Paris (FR)**

(72) Inventeur : **Rabault, Denis**
**Thomson-CSF,**
**SCPI,**
**B.P. 329**
**F-92402 Courbevoie Cedex (FR)**
Inventeur : **Delon, Michel**
**Thomson-CSF,**
**SCPI,**
**B.P. 329**
**F-92402 Courbevoie Cedex (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(54) **Caméra à détecteur matriciel munie d'un dispositif de microbalayage.**

(57) L'invention concerne les caméras à détecteur matriciel associé à un dispositif de microbalayage et vise à obtenir une résolution sensiblement améliorée, sans apparition de zones mortes ni de flou dans l'image.

La solution préconisée consiste à créer un microbalayage par rotation d'au moins un élément optiquement transparent incliné sur l'axe optique de la caméra et tournant autour de cet axe optique.

Selon une forme de réalisation, une caméra à détecteur matriciel (M) comporte un objectif de focalisation (4) de flux incident (Fi) pour former une image de la scène observée sur le détecteur (M) constituée de détecteurs élémentaires (D1) et disposé dans le plan froid d'un cryostat (3). Le dispositif de microbalayage comporte trois lames optiquement transparentes (L1, L2, L3), respectivement inclinées sur l'axe optique (X'X) selon un angle prédéterminé ($\theta_1$, $\theta_2$, $\theta_3$) pour définir une amplitude de microbalayage, et tournant autour de (X'X) avec des vitesses de rotation de pulsations adaptées à l'aide d'un moteur (1) couplé à un ensemble réducteur (2) à engrenages (E1, E2, E3).

FIG.2

EP 0 680 206 A1

L'invention concerne les caméras à détecteur matriciel munies d'un dispositif de microbalayage et d'un détecteur matriciel associé, et plus particulièrement les caméras d'observation infrarouges de ce type.

La détection infrarouge utilise le flux infrarouge émis par un corps en fonction de sa température, une telle dépendance obéissant à la loi de Planck. Cette détection s'opère dans la pratique dans les bandes spectrales 3 à 5 μm et/ou 8 à 12 μm correspondant aux fenêtres de transmission atmosphériques. Les caméras utilisées pour former des images à partir d'une telle détection font intervenir une chaîne optronique de différents éléments comprenant: un système optique de réception du flux de lumière provenant de la scène à observer; un objectif de focalisation pour la formation d'une image de cette scène sur un détecteur constitué de surfaces élémentaires organisées sous forme matricielle et sensible dans la ou les fenêtres de transmission infrarouge, le détecteur étant disposé dans le "plan froid" d'un cryostat pour analyser l'image formée par le système optique; un circuit de multiplexage et de lecture de charges intégrées par les surfaces photosensibles (tels que des circuits CCD) pour former un signal correspondant aux flux élémentaires reçus par les surfaces photosensibles ; et un circuit de traitement du signal délivré par le détecteur afin de constituer un signal de visualisation.

Avec de telles matrices bidimensionnelles, la résolution de l'image visualisée dépend fortement de l'organisation des surfaces de sensibilité et, en particulier de la présence de zones non sensibles entre les surfaces photosensibles élémentaires carrées ou rectangulaires disposées régulièrement. Ces zones, appelées zones "mortes", correspondent aux emplacements des circuits de lecture de commande du détecteur. Ces zones mortes forment des "zones aveugles" sur l'image visualisée par la caméra. A titre d'exemple, sur une mosaïque de 128 x 128 pixels sensibles dans la bande 3 à 5 μm, les surfaces photosensibles n'occupent qu'environ 25 % de la surface totale de la mosaïque. Ainsi les mosaïques de détection actuelles laissent apparaître une "trame" aveugle constituée par les espaces séparant les surfaces photosensibles élémentaires disjointes. Le principe du microbalayage pour supprimer cet effet de trame et donc améliorer la résolution du détecteur est bien connu; il est décrit par exemple dans l'article de la revue SPIE, Vol. 1685, p. 213 à 220 intitulé "resolution improvement for HgCdTe IRCCD". Les moyens classiques pour réaliser un tel balayage, qui donnent à la ligne de visée plusieurs positions discrètes proches les unes des autres, consistent en un miroir ou un prisme auquel plusieurs positions intermédiaires discrètes sont données pour faire vibrer l'image à analyser sur le plan de détection. Quatre positions sont en fait obtenues par vibration de l'élément optique (miroir ou prisme) à une fréquence adaptée, grâce à un activateur piézo-électrique bimorphe. Ceci permet d'obtenir plus de points d'image, correspondant aux zones aveugles du détecteur, et permet par là d'améliorer sa résolution.

Lorsque l'on opère à des fréquences de travail relativement élevées (typiquement 50 Hz pour ce type d'application), les éléments de mécanique associés doivent avoir des temps de réponse très courts, ce qui implique des montages complexes et coûteux. Dans tous les cas, cette solution entraîne un effet de flou d'image du fait que la mise en oeuvre d'un nombre discret de positions conserve une intégration de charges entre deux positions.

L'invention vise à obtenir une résolution sensiblement améliorée, et même une très bonne résolution nécessaire pour atteindre les performances désirées dans certaines applications (par exemple pour la détection et la reconnaissance infrarouge à longue portée), sans effet de flou ni accroissement sensible de poids, de volume et de coût.

Pour atteindre cet objectif, l'invention propose de créer un microbalayage par rotation, dans le faisceau de focalisation, d'un ou plusieurs éléments optiquement transparents inclinés sur l'axe optique de la caméra et tournant à des vitesses constantes autour de l'axe optique différent de l'axe de symétrie normal au plan moyen de ces éléments. Le mécanisme associé se réduit alors à un moteur de puissance réduite et à un système d'engrenage dans le cas où plusieurs lames sont mises en oeuvre. L'utilisation d'un nombre suffisant d'éléments optiques en rotation et non en vibration élimine le phénomène de flou.

Dans ces conditions, les lames tournent en provoquant un effet de microbalayage du faisceau de focalisation et donc de l'image projetée. On dispose de plusieurs paramètres pour ajuster le microbalayage: l'inclinaison des lames pour régler l'amplitude du microbalayage, les pulsations des vitesses de rotation des éléments optiques pour obtenir un nombre adapté de positions intermédiaires formées par le microbalayage, le temps d'intégration des charges du détecteur réduit dans la proportion du nombre de positions intermédiaires créées pendant un cycle de microbalayage et correspondant à une fréquence de lecture augmentée d'autant.

Plus précisément, l'invention a pour objet une caméra à détecteur matriciel munie d'un dispositif de microbalayage, comprenant un système optique de réception d'un flux lumineux provenant d'une scène à observer et définissant un axe optique, un objectif de focalisation de ce flux pour la formation d'une image de cette scène sur le détecteur matriciel constitué de détecteurs élémentaires photosensibles dans une bande spectrale donnée, le détecteur étant dans le plan froid d'un cryostat pour analyser l'image formée, et un circuit électronique de traitement des charges délivrées après intégration pendant un temps donné par les détecteurs élémentaires en fonction des flux élémentaires captés, la caméra étant caractérisée en ce que le dispositif de

2

microbalayage associé au détecteur matriciel comporte au moins un élément (L1, L2, L3) optiquement transparent dans ladite bande spectrale, interceptant le flux incident en faisceau convergent, incliné sur l'axe optique selon un angle prédéterminé pour définir une amplitude de microbalayage et tournant autour de cet axe optique avec une pulsation réglable définissant plusieurs positions intermédiaires apparentes pour chaque détecteur élémentaire.

Selon une forme de réalisation, le dispositif de microbalayage comporte plusieurs lames entraînées en rotation par un axe de moteur de faible puissance, couplé à un ensemble réducteur de vitesse à engrenages démultiplicateurs adaptés à chaque lame.

Les vitesses des lames sont adaptées pour obtenir un nombre de positions intermédiaires de l'image projetée régulièrement réparties dans le plan de focalisation. Plus le nombre de positions intermédiaires est grand plus les durées de passage d'une position à l'autre sont réduites, et donc plus la résolution de l'image finale est élevée.

D'autre part, plus le nombre de lames est élevé, plus la configuration du balayage obtenu par l'ensemble se rapproche d'une configuration de balayage idéal, sans flou d'image et sans temps mort entre les positions de balayage. Il convient de mettre en oeuvre le nombre de lames adapté à la résolution souhaitée ; dans les conditions de mise en oeuvre de l'invention décrits ci-après, il apparaît qu'un nombre de lames égal à 3 permet de se rapprocher notablement du balayage idéal.

L'invention sera mieux comprise et d'autres détails et avantages apparaîtront au cours de la description d'un exemple de réalisation qui suit, accompagné des figures annexées qui représentent respectivement :

- la figure 1, un exemple de positionnement des détecteurs d'une matrice associée à un balayage 2 x 2 d'un demi-pas;
- la figure 2, un exemple de réalisation d'un dispositif de microbalayage selon l'invention ;
- les figures 3a à 3c, les figures de balayage obtenues avec 1, 2 ou 3 lames tournantes pour un microbalayage 2 x 2.

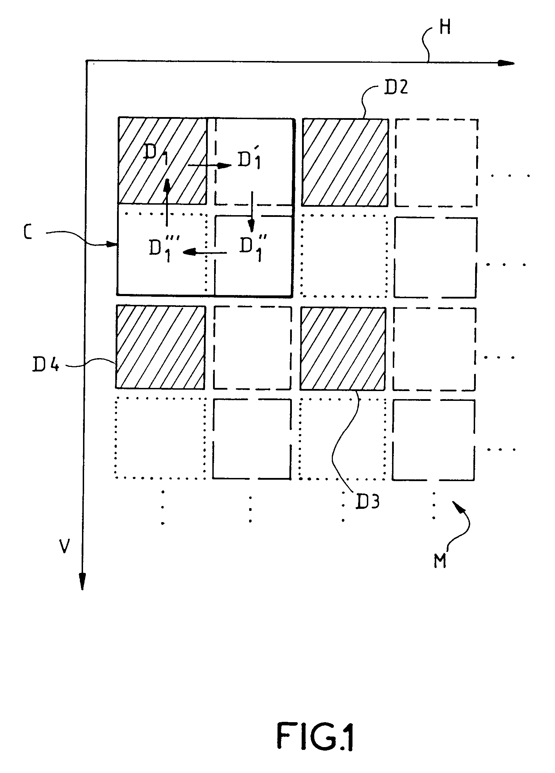

Dans l'exemple de mise en oeuvre d'un dispositif de microbalayage décrit ci-après, le microbalayage obtenu, illustré à la figure 1, est d'amplitude égale à un demi-pas, un pas étant défini par la distance entre deux détecteurs élémentaires D1, D2, D3, D4,..., d'une matrice de détection M. Un tel microbalayage est de type 2 x 2, c'est-à-dire qu'il permet une amélioration de la résolution d'un facteur 2 dans la direction horizontale H et dans la direction verticale V.

Sur la figure 1, ce type de balayage correspond à des positions apparentes de chaque détecteur, par exemple de D1, situées aux quatre coins d'un carré C. Le temps d'intégration des charges des détecteurs, qui correspond au temps passé dans chacune de ces positions, est ainsi réglé pour obtenir quatre zones d'intégration D1, D', D''1, D'''1, pendant un cycle élémentaire de microbalayage. Le réglage adapté des temps d'intégration dans des circuits de traitement annexes est connu de l'Homme de l'Art et est décrit, par exemple, dans la référence citée ci-dessus.

Le balayage qui vient d'être brièvement exposé est un balayage idéal, dans la mesure où il permet le positionnement idéal de détecteurs "virtuels", sans recouvrement, ni apparition de zone "morte", et dans la mesure où la durée correspondant au passage d'une position à l'autre est supposée nulle. Le flou introduit par déplacement du détecteur d'une position à une autre pendant le temps d'intégration des charges est ainsi idéalement éliminé.

Le mécanisme proposé par l'invention pour réaliser un microbalayage de ce type permet de se situer au plus près de ces conditions idéales.

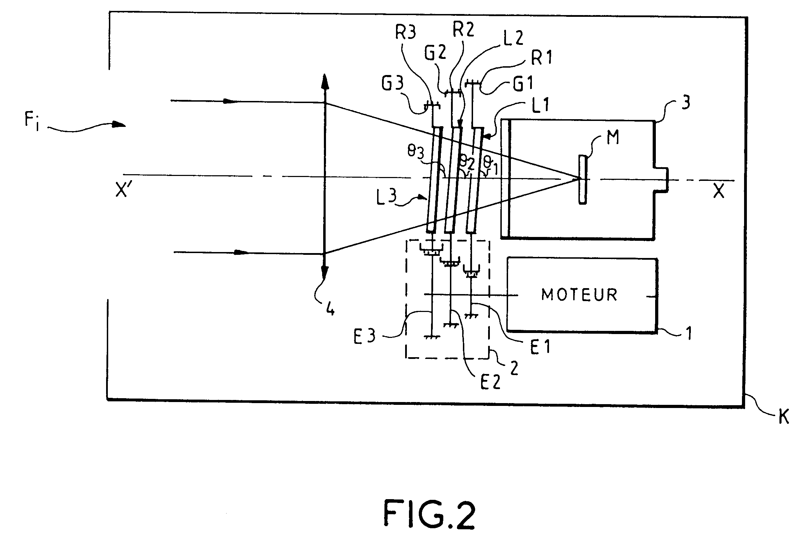

Un exemple de mise en oeuvre de dispositif de microbalayage pour caméra est illustré à la figure 2. Un tel dispositif comporte un moteur 1 associé à un ensemble réducteur à engrenages 2 pour entraîner, à des vitesses de rotation adaptées, trois lames L1, L2, L3 inclinées selon des angles adaptés θ1, θ2, θ3 sur un axe X'X. L'axe X'X est l'axe optique d'une matrice de détection M, disposée dans un cryostat 3 de la caméra K. La caméra K comporte également un objectif de focalisation 4 d'un faisceau incident Fi provenant d'une scène pour former, sur la matrice M, une image de la scène observée dans un champ de vision donné.

Le système optique de balayage de champ et les circuits de traitement (multiplexage, lecture) des signaux délivrés par les détecteurs de la matrice de détection n'ont pas été représentés, car ils ne concernent pas directement l'invention.

Les lames inclinées, L1 à L3, sont disposées sur le trajet optique du faisceau incident Fi, une fois conformé en faisceau convergent par l'objectif 4. Chaque lame, L1 à L3, est entraînée par un engrenage, respectivement E1 à E3, à la manière d'une roue voilée. Les engrenages entraînent les lames logées à l'intérieur de gorges G1, G2, G3 dont les surfaces périphériques forment des roues dentées R1, R2, R3 emboîtées dans les engrenages E1, E2, E3 de l'ensemble réducteur 2. Chaque rotation de lame créé un balayage du faisceau Fi sous la forme d'une nutation autour de l'axe optique X'X. L'amplitude de ce balayage est réglée par l'angle d'inclinaison θ de la lame.

Les rapports de réduction d'engrenage sont adaptés pour chacune des lames, respectivement L1, L2, L3, de manière à obtenir, dans l'exemple de réalisation, le balayage 2 x 2 évoqué ci-dessus. Le calcul des valeurs de pulsation ainsi que celles des amplitudes des balayages de chaque lame est conduit ci-après.

Si l'on décompose en série de Fourier les deux composantes selon les axes H et V du balayage 2 x 2 de la figure 1, il apparaît qu'il est la somme d'une infinité de nutations du type précédent, permettant de réaliser un balayage global idéal, sans temps mort entre une infinité de positions du détecteur élémentaire animé d'un tel balayage.

En mettant en cascade un nombre suffisant de lames tournantes, L1, L2,..., Li, on se rapproche de ce balayage idéal.

Les lois de balayage dans le cas du microbalayage 2 x 2 visé principalement mais pas exclusivement par l'invention, fournissent les valeurs de pulsation $\omega_i$ de balayage et d'amplitudes $A_i$ suivantes, pour une succession de lames disposées en cascade L1, L2, ...Li, i variant de 1 à un nombre entier n (rapportées à la valeur de pulsation $\omega$ et d'amplitude A de la première lame L1):

| Lame | Pulsation | Amplitude |
|---|---|---|
| 1 | $\omega$ | A |
| 2 | $-3\omega$ | $-A/3$ |
| 3 | $5\omega$ | $A/5$ |
| i | $(-1)^{i+1}(2i-1)\omega$ | $(-1)^{i+1} A/(2i-1)$ |
| **Tableau I** | | |

Deux lames successives tournent dans le cas idéal correspondant à des angles d'inclinaison dans des sens opposés, à des vitesses uniformes croissantes et avec des amplitudes décroissantes. Le système réducteur 2 peut comporter des inverseurs d'engrenage, ou des engrenages supplémentaires de rapport de réduction adaptés, pour fournir les valeurs de pulsation conformes aux valeurs du tableau I.

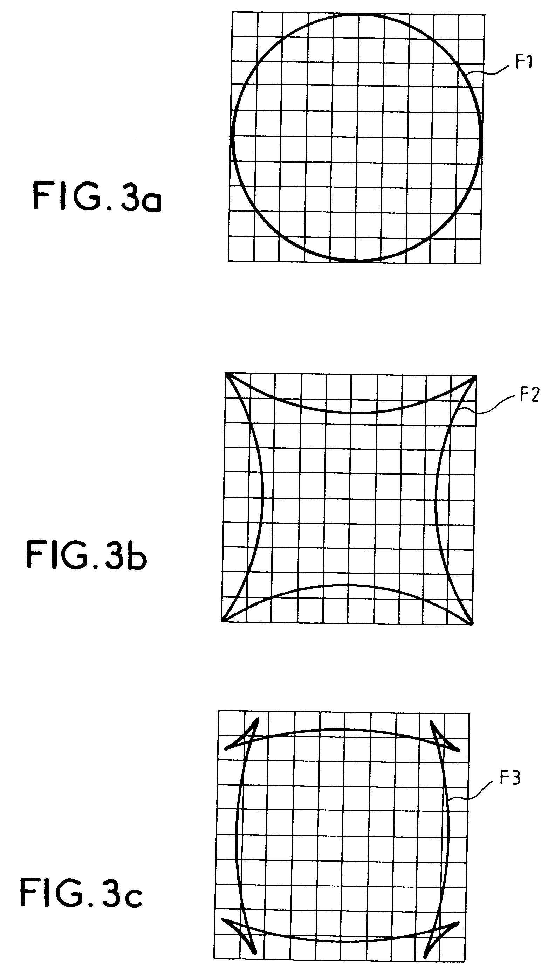

Les figures 3a à 3c représentent respectivement, les figures de balayage F1, F2 et F3 obtenues par mise en oeuvre du dispositif selon l'invention avec respectivement 1, 2 ou 3 lames tournantes. En augmentant le nombre de lames, on passe d'une figure de balayage F1 parfaitement circulaire à une figure de balayage qui tend vers le carré. Il est bien visible sur la figure 3c, qu'un nombre de lames égal à 3 permet de se rapprocher notablement de la figure de balayage idéale qui possède la forme d'un carré parfait.

Dans le cas de l'exemple de réalisation illustré à la figure 2, n est égal à 3. Le dispositif comporte 3 lames L1, L2, L3, d'épaisseur 1 mm et constituées d'un matériau à base de ZnS, transparent dans la bande passante spectrale de la caméra, les détecteurs de la matrice de détection étant espacés de 50 µm, les fréquences de rotation et les angles d'inclinaison ($\theta_i$) des lames ont alors pour valeurs, conformément à l'étude précédente:

| Lame | Fréquence de rotation | Inclinaison |
|---|---|---|
| L1 | 50 Hz | 0,9° |
| L2 | 150 Hz | 0,3° |
| L3 | 250 Hz | 0,18° |

L'utilisation d'un système réducteur à engrenages présente l'avantage d'éviter les problèmes de synchronisation de mise en rotation des différentes lames disposées en cascade.

L'invention n'est pas limitée à l'exemple de réalisation décrit et illustré. Le microbalayage selon l'invention peut également être obtenu autrement qu'avec des lames à faces parallèles tournantes en faisceau convergent; il peut être réalisé avec des prismes, des réseaux ou des hologrammes utilisés en faisceau parallèle et mis en oeuvre d'une façon semblable à celle des lames.

D'autre part, afin d'éliminer les aberrations optiques dans le cas d'une mise en oeuvre en faisceau convergent, il est avantageux d'intégrer la conception même des lames, les dégradations résultant des faibles déviations optiques résultant de cette mise en oeuvre, notamment lorsqu'on utilise un matériau à caractère dispersif.

Par ailleurs, l'invention n'est pas limitée à un balayage 2 x 2, mais s'applique à tout balayage périodique. Les composantes horizontale et verticale, H et V, de tout balayage périodique sont en effet développables en série de Fourier, et chacun des termes de la série correspond à une ou deux nutations du type précédemment décrit. Un balayage 3 x 3 ou 3 x 2 peut ainsi être également obtenu s'il est mieux adapté à la configuration d'un détecteur ne se présentant pas sous une forme de matrice droite.

## Revendications

**1 -** Caméra à détecteur matriciel (M) munie d'un dispositif de microbalayage, comprenant un système optique de réception d'un flux lumineux (Fi) provenant d'une scène à observer et définissant un axe optique (X'X) un objectif de focalisation (4) de ce flux (Fi) en faisceau convergent pour la formation d'une image de cette scène sur le détecteur matriciel (M) constitué de détecteurs élémentaires photosensibles (D1) dans une bande spectrale donnée, le détecteur matriciel (M) étant dans le plan froid d'un cryostat (5) pour analyser l'image formée, et un circuit électronique de traitement des charges délivrées après intégration pendant un temps donné par les détecteurs élémentaires en fonction des flux élémentaires captés, la caméra étant caractérisée en ce que le dispositif de microbalayage associé au détecteur matriciel (M) comporte au moins un élément (L1, L2, L3, Li) optiquement transparent dans ladite bande spectrale, interceptant le flux incident en faisceau convergent, incliné sur l'axe optique (X'X) selon un angle prédéterminé pour définir une amplitude Ai de microbalayage, et tournant autour de cet axe optique (X'X) avec une pulsation réglable définissant plusieurs positions intermédiaires apparentes (D'1, D''1, D'''1) pour chaque détecteur élémentaire (D1).

**2 -** Caméra selon la revendication 1, caractérisée en ce que les éléments optiquement transparents sont constitués de i lames à faces parallèles (Li) montées en cascade sur l'axe optique (X'X), i variant de 1 à n, dont les amplitudes de microbalayage (Ai) correspondant à une inclinaison $\theta$ i sur l'axe optique (X'X) et les pulsations $\omega$i de rotation obéissant aux relations suivantes, en fonction de la pulsation $\omega$ et de l'amplitude A de la première lame (L1):

$$\omega_i = (-1)^{i+1} (2i-1)\, \omega_1$$
$$A_i = (-1)^{i+1} A/(2i-1)$$

de manière à réaliser un microbalayage de type 2 x 2.

**3 -** Caméra selon la revendication 1, caractérisée en ce que les éléments optiquement transparents (L1, L2, L3, Li) sont entraînés à des vitesses de rotation de pulsations adaptées à l'aide d'un moteur (1) couplé à un ensemble réducteur (2) à engrenages (E1, E2, E3).

**4 -** Caméra selon la revendication 3, caractérisée en ce que les lames (L1, L2, L3) sont logées dans des gorges (G1, G2, G3) chaque surface périphérique de chaque gorge constituent une roue dentée (R1, R2, R3) coopérant avec un engrenage (E1, E2, E3) de l'ensemble réducteur (2).

FIG.1

FIG.2

FIG.3a

F1

FIG.3b

F2

FIG.3c

F3

**EP 0 680 206 A1**

<table>
<tr><td>Office européen<br>des brevets</td><td>**RAPPORT DE RECHERCHE EUROPEENNE**</td><td>Numero de la demande<br>EP 95 40 0880</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | WO-A-86 06214 (IRVINE SENSORS CORPORATION)<br>* page 22, ligne 7 - page 23, ligne 22 *<br>* figures 13,14 * | 1-4 | H04N3/15<br>H04N5/33 |
| Y | PATENT ABSTRACTS OF JAPAN<br>vol. 14 no. 108 (E-896) ,27 Février 1990<br>& JP-A-01 309479 (NIKON CORP.) 13<br>Décembre 1989,<br>* abrégé *<br>* voir aussi fig. 1a,1b,1c,10,12,18 du<br>document japonnais * | 1-4 | |
| A | WO-A-93 09463 (THOMSON- CSF)<br>* page 7, ligne 7 - page 8, ligne 7 *<br>* page 9, ligne 14 - page 10, ligne 12 *<br>* revendication 9 * | 1-4 | |
| A | EP-A-0 133 890 (BODENSEEWERK GERÄTETECHNIK GMBH)<br>* page 1, ligne 17 - page 2, ligne 20 *<br>* page 4, ligne 9 - page 6, ligne 9 *<br>* page 10, ligne 12 - ligne 17 * | 1-4 | |
| A | EP-A-0 401 074 (THOMSON- CSF)<br>* colonne 1, ligne 33 - colonne 4, ligne 18 * | 1 | DOMAINES TECHNIQUES RECHERCHES (Int.Cl.6)<br><br>H04N |
| A | US-A-3 046 334 (ROE JOHN H.)<br>* figures 2-4 * | 3,4 | |

Le présent rapport a été établi pour toutes les revendications

| Lieu de la recherche | Date d'achèvement de la recherche | Examinateur |
|---|---|---|
| LA HAYE | 16 Juin 1995 | Wentzel, J |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)